# FASCICULE DE BREVET EUROPEEN

(11) **EP 2 773 592 B1**
(45) Date de publication et mention de la délivrance du brevet: **05.08.2015**
(21) Numéro de dépôt: 12790601.4
(22) Date de dépôt: 18.10.2012
(51) Int. Cl.: C02F 1/68, C02F 1/46, C02F 1/00

(54) **INSTALLATION ET PROCEDE DE MINERALISATION D'UNE BOISSON AQUEUSE**
ANLAGE UND VERFAHREN ZUR MINERALISIERUNG EINES WÄSSRIGEN GETRÄNKS
FACILITY AND METHOD FOR MINERALISING AN AQUEOUS BEVERAGE

(30) Priorité: 03.11.2011 FR 1159962
(43) Date de publication de la demande: 10.09.2014
(73) Titulaire: SEB SA, 69130 Ecully (FR)
(72) Inventeur: BOUCKNOOGHE, Thomas, F-52000 Chaumont (FR); TUFFE, Stéphane, F-73160 Cognin (FR)
(74) Mandataire: Novagraaf Technologies
(86) Numéro de dépôt international: PCT/FR2012/052379
(87) Numéro de publication internationale: WO 2013/064764

(56) Documents cités:
- WO-A1-02/085794

## Description

La présente invention concerne de manière générale une installation et un procédé de minéralisation d'une boisson aqueuse, et notamment de l'eau potable.

Le domaine visé est en premier lieu celui des articles électroménagers prévus pour la préparation de boissons aqueuses, et plus particulièrement la minéralisation de boissons aqueuses, y compris l'eau potable.

Par minéralisation d'une boisson, on entend, au sens de la présente invention, son enrichissement en sels minéraux et/ou oligo-éléments.

Par eau potable, on entend, au sens de la présente invention, toute eau apte à la consommation humaine.

A l'heure actuelle, la majorité des procédés mis en oeuvre pour minéraliser de l'eau potable utilise le même principe de dissolution passive de sels minéraux (par exemple sous forme de roche soluble telle que la dolomite), qui présente l'inconvénient d'être lent et de ne pas permettre un large choix dans la composition finale de l'eau en minéraux.

Ainsi, pour remédier à ces problèmes, la demanderesse a mis au point une installation permettant la minéralisation par voie électrolytique d'une boisson aqueuse, de manière quasi-instantanée tout en contrôlant la quantité finale de minéraux.

Il est connu de l'homme de l'art d'utiliser la voie électrolytique pour traiter de l'eau. Ainsi, le brevet américain US 7,306,725 décrit un appareil de traitement de l'eau comportant une électrode apte à larguer des ions Mg²⁺ ou Ca²⁺. Toutefois, il s'agit d'une installation pour la décontamination des chlorures et rien n'est dit dans US 7,306,725 US concernant l'enrichissement de l'eau en cations Mg²⁺ ou Ca²⁺.

De même, le brevet américain US 6,860,990 décrit également un dispositif de traitement de l'eau. Celui-ci comporte une électrode sacrificielle en magnésium. Toutefois, les ions Mg²⁺ produits par voie électrolytique à partir de cette électrode servent à neutraliser les ions chlorures et non à l'enrichissement de l'eau en Mg²⁺.

La présente invention a donc pour objet une installation pour la minéralisation d'une boisson aqueuse, par exemple une eau potable comprenant :
▪ un dispositif de filtration de l'eau ou de la boisson,
▪ un dispositif de minéralisation de la boisson filtrée comprenant un réservoir, dans lequel est disposé au moins un composé comprenant au moins un élément minéral sous forme d'un métal ou de son sel, et
▪ un système de circulation dans ladite installation apte à amener la boisson filtrée en provenance dudit dispositif de filtration vers ledit dispositif de minéralisation.

Selon l'invention, le dispositif de minéralisation comprend :
- un réacteur anodique de minéralisation qui continent :
   - un système d'introduction de la boisson à minéraliser communiquant avec ledit système de circulation,
   - ledit composé constituant une anode soluble, qui est reliée au pole positif d'un générateur de courant électrique, ledit élément minéral contenu dans ledit composé étant apte à former des cations métalliques sous l'effet d'un courant électrique,
   - un système d'évacuation de la boisson une fois minéralisée hors dudit réacteur d'anodisation,
- un réacteur cathodique comprenant une cathode, par exemple en acier inoxydable, plongeant dans une solution saturée en sels aptes à assurer la conduction électrique dans le milieu tout en évitant de redéposer du métal sur la cathode par réduction (par exemple des sels de type NaCl), ladite cathode étant reliée au pole négatif dudit générateur,
- une membrane imperméable aux cations métalliques dudit élément minéral issus de l'anode soluble sous l'effet d'un courant électrique, ladite membrane séparant lesdits réacteurs anodique et cathodique à l'intérieur du dispositif de minéralisation.

Par sels minéraux, on entend, au sens de la présente invention, les sels métalliques qui sont présents dans l'organisme humain en quantité élevée ou suffisamment élevée pour jouer un rôle plastique ou de construction (par exemple pour l'édification de nouvelles cellules, réparation des tissus, élaboration des enzymes nécessaires à la digestion, des hormones etc.) ou un rôle à la fois plastique et fonctionnel (notamment une bonne utilisation des nutriments énergétiques, protection et régulation du bon fonctionnement de l'organisme). De tels sels-minéraux sont alors considérés comme étant des macronutriments. A titre de sels minéraux (macronutriments), on utilisera avantageusement dans le cadre de la présente invention les métaux alcalins et alcalino-terreux (tels que le sodium, le potassium, le magnésium, et le calcium) et le fer.

Par oligo-éléments, on entend, au sens de la présente invention, des sels minéraux métalliques présents en quantité faible ou infime dans l'organisme, qui malgré leur faible dosage sont néanmoins indispensable au bon fonctionnement de l'organisme et dont l'absence peut provoquer des anomalies structurelles et physiologiques. A titre d'oligo-éléments, on utilisera avantageusement dans le cadre de la présente invention le zinc, le cuivre, le manganèse, le sélénium, le cobalt, le chrome, le germanium, le rubidium, et le vanadium.

L'élément minéral contenu dans l'anode est nécessairement un élément métallique, car sinon il n'est pas possible de réaliser une minéralisation d'une boisson ou d'une eau par voie électrolytique à l'aide de l'installation selon l'invention.

Selon un premier mode de réalisation avantageux de la présente invention, le composé de l'anode soluble peut être essentiellement métallique, et est constitué de l'élément minéral sous forme de métal pur ou allié à un ou plusieurs autres éléments chimiques.

Par composé essentiellement métallique, on entend au sens de la présente invention, un composé ayant des propriétés métalliques et composé de deux ou plusieurs éléments, dont un au moins est un métal.

Dans ce premier mode de réalisation, on utilisera avantageusement une anode entièrement constituée de magnésium ou d'un alliage calcium/magnésium.

Selon un deuxième mode de réalisation avantageux de la présente invention, le composé de l'anode soluble peut être constitué d'un matériau poreux, dont les pores sont remplis d'au moins un sel minéral.

Par exemple, on peut utiliser une mousse métallique, par exemple une mousse de magnésium métal dont les pores sont remplis de carbonate de calcium et chlorure de calcium.

En fonctionnement, lorsque l'on applique une différence de potentiel entre l'anode et la cathode, on génère à l'anode la formation de cations métalliques dudit élément minéral. La vitesse de réaction est contrôlée par l'intensité du courant électrique ainsi généré.

Par exemple, dans le cas d'une anode uniquement constituée de magnésium, la réaction principale qui se déroule à l'anode est la suivante :

(1) Mg → Mg²⁺ + 2e-

De la même façon, dans le cas d'une anode en calcium, la réaction principale qui se déroule à l'anode est la suivante :

(2) Ca → Ca²⁺ + 2e⁻

Si l'anode comporte essentiellement un métal tel que le magnésium ou le calcium, mais également, en des quantités bien moindres d'autres éléments chimiques, c'est la vitesse de la réaction anodique (1) ou (2) (selon que le métal principal est le magnésium ou le calcium) qui contrôlera la vitesse de dissolution du composé constitutif de l'anode.

Si l'anode est constituée d'un alliage métallique, proportion des éléments dissous est la même que dans l'alliage : tous les éléments de l'alliage sont dissous en même temps et leur vitesse de dissolution est proportionnelle au courant électrique imposé.

Si l'anode est constituée d'un matériau poreux tel qu'une mousse métallique en magnésium dont les pores sont remplis d'au moins un sel minéral, le magnésium est dissous selon la réaction (1), tandis que les sels métalliques contenus dans les pores passent en solution selon les principes de dissolution classique des sels dans l'eau.

La nature du composé constitutif de l'anode est choisie en fonction des applications visées (types de boissons ou d'eaux). Par contre, les concentrations en minéraux visés pour une boisson ou une eau données dépendent de facteurs tels que la vitesse de dissolution (dépendante du courant électrique imposé, et de la surface de l'anode), le temps de passage de l'eau sur la surface de l'anode ou les surfaces exposées de sels minéraux et/ou de métaux.

Par ailleurs, la réaction principale qui se déroule à la cathode, dans un milieu adéquat aqueux à pH entre 1 et 7, est la suivants :

(3) 2H⁺ + 2e⁻ → H₂

En fonctionnement, en faisant varier un certain nombre de paramètres (comme par exemple la taille de l'anode, la composition chimique de l'anode, l'intensité du courant, ou encore l'épaisseur de la membrane séparant les réacteurs anodique et cathodique), on peut donc choisir la concentration que l'on souhaite atteindre : la quantité visée sera très faible si l'élément minéral que l'on souhaite ajouter appartient à la catégorie des oligoéléments), tandis qu'elle sera plus élevée si l'élément minéral appartient à la catégorie des sels minéraux de type macronutriments.

L'installation selon l'invention, comprend, outre le dispositif de minéralisation, un dispositif de filtration, qui est disposé en amont de ce dernier. Il s'agit de préférence d'un système par osmose inverse, car il permet d'éliminer la grande majorité des composants organiques et inorganiques indésirables dissous, comme par exemple les métaux lourds (en l'occurrence Pb, Cd, et Hg) ou les particules organiques comme les bactéries ou hydrocarbures. Etant donné qu'un système par osmose inverse a par ailleurs tendance à éliminer aussi les sels minéraux, l'installation selon l'invention permet de partir d'une eau pure, que l'on reminéralise ensuite en maitrisant la quantité finale de minéraux dans l'eau.

La présente invention a encore pour objet un procédé de minéralisation d'une eau potable ou d'une boisson aqueuse comprenant les étapes de filtration préalable de l'eau ; puis de minéralisation de l'eau ainsi filtrée par mise en circulation dans un réservoir contenant au moins un composé comportant au moins un élément minéral sous forme d'un métal électropositif ou de son sel.

Selon l'invention, la minéralisation est réalisée par voie électrolytique et comporte les étapes suivantes :
- mise en oeuvre d'une cellule électrochimique comprenant un réacteur anodique de minéralisation constitué du réservoir dans lequel l'eau ou la boisson filtrée est mise en circulation, ledit réacteur anodique contenant ledit composé à titre d'anode soluble reliée au pole positif d'un générateur de courant électrique, et un réacteur cathodique comprenant une cathode (par exemple en acier inoxydable) plongeant dans une solution saturée en sels aptes à assurer la conduction électrique dans le milieu tout en évitant de redéposer du métal sur la cathode par réduction (par exemple de type NaCl), ladite cathode étant reliée au pole négatif dudit générateur, lesdits réacteurs anodique et cathodique étant séparés à l'intérieur du dispositif de minéralisation par une membrane imperméable aux cations métalliques dudit élément minéral, puis
- application d'une différence de potentiel entre l'anode et la cathode, de manière à générer à l'anode la formation de cations métalliques dudit élément minéral.

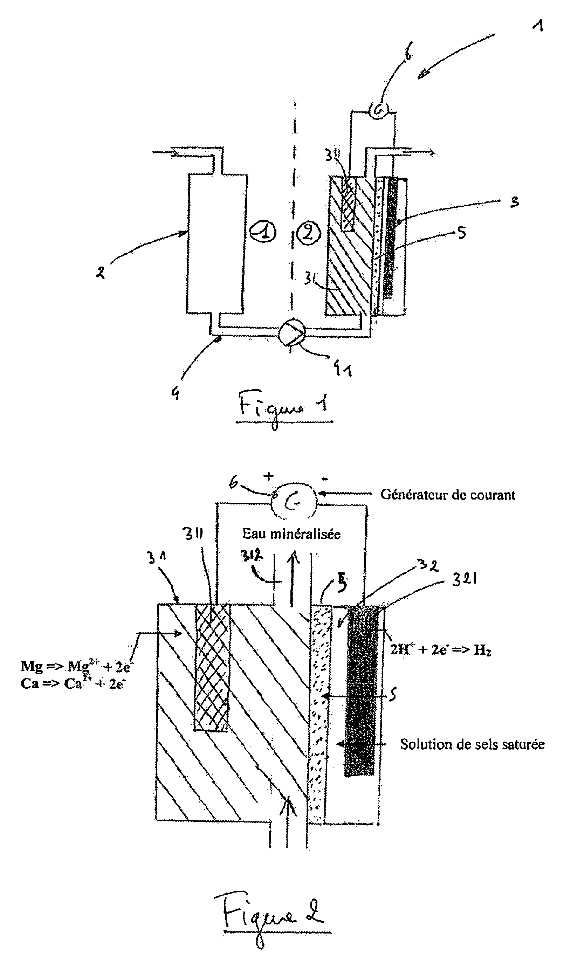

L'installation selon l'invention permet la mise en oeuvre du procédé selon l'invention lorsque l'on applique une différence de potentiel entre l'anode et la cathode, comme illustrée par les figures 1 et 2.

Comme indiqué précédemment, la filtration est réalisée par osmose inverse, de manière à éliminer l'essentiel des composés indésirables et obtenir une eau la plus pure possible.

Les avantages du procédé selon l'invention, notamment mis en oeuvre grâce à l'installation selon l'invention, sont les suivants :
- procurer à un utilisateur, dans le cadre d'un usage domestique, une boisson aqueuse ou une eau minéralisée riche en minéraux, quelle que soit la provenance de l'eau,
- fabriquer de l'eau minéralisée par un procédé sain, car il ne met en jeu que des minéraux habituellement présents dans l'eau avec une concentration optimisée, sans adjuvants et en ne faisant seulement intervenir qu'un courant électrique.
- maitriser la quantité de sels minéraux libérés : cela est possible en jouant sur l'intensité du courant électrique et le flux d'eau sur la surface de l'anode.

D'autres avantages et particularités de la présente invention résulteront de la description qui va suivre, donnée à titre d'exemple non limitatif et faite en référence aux figures 1 et 2 annexée :
- la figure 1 représente une vue schématique en coupe d'une installation selon l'invention,
- la figure 2 représente une vue schématique en coupe du dispositif de minéralisation de l'installation selon l'invention représentée sur la figure 1.

Les éléments identiques représentés sur les figures 1 et 2 sont identifiés par des références numériques identiques.

L'installation de minéralisation selon l'invention représentée sur la figure 1 comporte :
▪ un dispositif de filtration 2 d'eau potable,
▪ un dispositif de minéralisation 3 de l'eau filtrée, et
▪ un système 4 de circulation de l'eau dans l'installation 1.

Le système 4 de circulation permet d'amener directement l'eau potable filtrée en provenance du dispositif de filtration 2 vers le dispositif de minéralisation 3, via une pompe 41.

Sur la figure 2, est représenté, de manière plus détaillée, le dispositif de minéralisation 3 de l'installation 1 représentée sur la figure 1. Ce dispositif de minéralisation 3 comprend :
- un réacteur anodique de minéralisation 31 communiquant avec le système 4 de circulation de l'eau et présentant un système d'évacuation 312 de l'eau une fois filtrée, le réacteur anodique comportant au moins un composé 311 comprenant au moins un élément minéral sous forme d'un métal ou de son sel,
- un réacteur cathodique 32, qui est séparé du réacteur anodique dans le dispositif de minéralisation par une membrane 5 imperméable aux cations métalliques provenant de la dissolution du composé 311,

En ce qui concerne plus particulièrement le réacteur anodique 31 de l'installation selon l'invention, le composé 311 est relié au pole positif d'un générateur de courant électrique 6, de manière à constituer une anode.

A titre d'exemple, on utilise une électrode en magnésium se présentant sous forme d'un disque de 5 cm de diamètre et de 0,5 cm d'épaisseur. En pratique, on immerge un quart du disque de magnésium constituant l'anode dans le réacteur anodique 31.

En ce qui concerne plus particulièrement le réacteur cathodique 32 de l'installation selon l'invention, celui-ci comprend une cathode 321 en acier inoxydable plongeant dans une solution saturée en sels aptes à assurer la conduction électrique dans le milieu tout en évitant de redéposer par réduction du métal sur la cathode 32, qui est reliée au pole négatif du générateur 6,

En fonctionnement, une différence de potentiel de 80 V a été appliquée entre l'anode et la cathode, où se déroulent alors les réactions électrochimique suivantes :
à l'anode :

   (1) Mg → Mg²⁺ + 2e⁻
à la cathode :

   (3) 2H⁺ + 2e⁻ → H₂

Au bout de 5 minutes, on mesure, dans le réacteur anodique contenant la boisson ou l'eau à minéraliser, une concentration en ions Mg²⁺ de 40 mg/L. A titre de comparaison, on ne mesure qu'une concentration de 3 mg/L à partir d'une dolomite.

## Revendications

1. Installation (1) pour la minéralisation d'une boisson aqueuse comprenant :
▪ un dispositif de filtration (2) de la boisson,
▪ un dispositif de minéralisation (3) de la boisson filtrée comprenant un réservoir, dans lequel est disposé au moins un composé (311) comprenant au moins un élément minéral sous forme d'un métal ou de son sel, et
▪ un système (4) de circulation de la boisson dans ladite installation (1) apte à amener la boisson filtrée en provenance dudit dispositif de filtration (2) vers ledit dispositif de minéralisation (3),
**caractérisée en ce que** le dispositif (3) de minéralisation comprend :
- un réacteur anodique de minéralisation (31) qui continent :
• un système d'introduction (310) de l'eau à minéraliser communiquant avec ledit système de circulation (4),
• ledit composé (311) constituant une anode soluble (311) reliée au pole positif d'un générateur de courant électrique (6) et ledit élément minéral contenu dans l'anode soluble (311) étant apte à former des cations métalliques sous l'effet d'un courant électrique,
• un système d'évacuation (312) de la boisson une fois minéralisée hors dudit réacteur d'anodisation,
- un réacteur cathodique (32) comprenant une cathode (321) plongeant dans une solution saturée en sels aptes à assurer la conduction électrique dans le milieu tout en évitant de redéposer par réduction du métal sur ladite cathode (321), ladite cathode (321) étant reliée au pole négatif dudit générateur (6),
- une membrane (5) imperméable aux cations métalliques dudit élément minéral issus de l'anode soluble (311) sous l'effet d'un courant électrique, ladite membrane (5) séparant lesdits réacteurs anodique (31) et cathodique (32) à l'intérieur du dispositif de minéralisation (3).

2. Installation selon la revendication 1, **caractérisée en ce que** le composé de l'anode soluble (311) est essentiellement métallique et constitué de l'élément minéral sous forme de métal pur ou allié à un ou plusieurs autres éléments chimiques.

3. Installation selon la revendication 1, **caractérisée en ce que** le composé de l'anode soluble (311) est constitué d'un matériau poreux, dont les pores sont remplis d'au moins un sel minéral.

4. Installation selon la revendication 3, **caractérisée en ce que** le matériau poreux de ladite anode soluble (311) est une mousse métallique.

5. Installation selon l'une quelconque des revendications précédentes, **caractérisée en ce que** l'élément minéral est choisi parmi les métaux alcalins et les métaux alcalino-terreux, et le fer.

6. Installation selon la revendication 5, **caractérisée en ce que** l'élément minéral est choisi dans le groupe comprenant le magnésium, le calcium, le sodium et le potassium.

7. Installation selon l'une quelconque des revendications précédentes, **caractérisée en ce que** le dispositif de filtration (2) est un système par osmose inverse.

8. Procédé de minéralisation d'une boisson aqueuse de type eau potable comprenant les étapes suivantes :
▪ filtration préalable de la boisson; puis
▪ minéralisation de la boisson ainsi filtrée par mise en circulation dans un réservoir (31) contenant au moins un composé (311) comportant au moins un élément minéral sous forme d'un métal électropositif ou de son sel, et
**caractérisé en ce que** la minéralisation est réalisée par voie électrolytique et comporte les étapes suivantes :
- mise en oeuvre d'une cellule électrochimique comprenant un réacteur anodique de minéralisation (31) constitué du réservoir (31) dans lequel la boisson filtrée est mise en circulation, ledit réacteur anodique (31) contenant ledit composé (311) à titre d'anode soluble reliée au pole positif d'un générateur de courant électrique (6), et un réacteur cathodique (32) comprenant une cathode (321) en acier inoxydable plongeant dans une solution saturée en sels aptes à assurer la conduction électrique dans le milieu tout en évitant de redéposer par réduction du métal sur ladite cathode (321), ladite cathode (321) étant reliée au pole négatif dudit générateur (6), lesdits réacteurs anodique (31) et cathodique (32) étant séparés à l'intérieur du dispositif de minéralisation (3) par une membrane (5) imperméable aux cations métalliques dudit élément minéral, puis
- application d'une différence de potentiel entre l'anode et la cathode, de manière à générer à l'anode la formation de cations métalliques dudit élément minéral.

9. Procédé selon la revendication 8, **caractérisé en ce que** la filtration est réalisée par osmose inverse.

## Patentansprüche

1. Anlage (1) zum Mineralisieren eines wässrigen Getränks, umfassend:
- eine Vorrichtung zum Filtern (2) des Getränks,
- eine Vorrichtung zum Mineralisieren (3) des gefilterten Getränks, umfassend einen Behälter, in dem mindestens eine Verbindung (311) angeordnet ist, umfassend mindestens ein mineralisches Element in Form eines Metalls oder seines Salzes, und
- ein System (4) zur Zirkulierung des Getränks in der Anlage (1), das ausgelegt ist, um das gefilterte Getränk, das aus der Filtervorrichtung (2) stammt, zur Vorrichtung zum Mineralisieren (2) zu leiten,
**dadurch gekennzeichnet, dass** die Vorrichtung (3) zum Mineralisieren Folgendes umfasst:
- einen anodischen Mineralisierungsreaktor (31), der Folgendes enthält:
- ein System zur Einführung (310) des Wassers, das mineralisiert werden soll, das mit dem System zur Zirkulierung (4) kommuniziert,
- wobei die Verbindung (311) eine löslichen Anode (311) bildet, die mit dem positiven Pol eines elektrischen Stromgenerators (6) verbunden ist und der Gehalt an mineralischem Element, das in der löslichen Anode (311) enthalten ist, ausgelegt ist, um metallische Kationen unter dem Einfluss eines elektrischen Stroms zu bilden,
- ein System zur Entnahme (312) des Getränks, nachdem es mineralisiert ist, aus dem Anodisierungsreaktor,
- einem kathodischen Reaktor (32), umfassend eine Kathode (321), die in eine mit Salzen gesättigte Lösung getaucht ist, die ausgelegt ist, um die elektrische Leitfähigkeit im Medium sicherzustellen und gleichzeitig zu vermeiden, dass durch Reduktion erneut Metall auf der Kathode (321) abgelegt wird, wobei die Kathode (321) mit dem negativen Pol des Generators (6) verbunden ist,
- eine Membran (5), die für die metallischen Kationen des mineralischen Elements undurchlässig ist, die von der löslichen Anode (311) unter dem Einfluss eines elektrischen Stroms stammen, wobei die Membran (5) die anodischen (31) und kathodischen Reaktoren (32) im Inneren der Vorrichtung zum Mineralisieren (3) trennt.

2. Anlage nach Anspruch 1, **dadurch gekennzeichnet, dass** die Verbindung der löslichen Anode (311) im Wesentlichen metallisch ist und aus dem mineralischen Element in Form von reinem oder mit einem oder mehreren anderen chemischen Elementen legiertem Metall besteht.

3. Anlage nach Anspruch 1, **dadurch gekennzeichnet, dass** die Verbindung der löslichen Anode (311) aus einem porösen Material besteht, dessen Poren mit mindestens einem Mineralsalz gefüllt sind.

4. Anlage nach Anspruch 3, **dadurch gekennzeichnet, dass** das poröse Material der löslichen Anode (311) ein Metallschaum ist.

5. Anlage nach einem der vorhergehenden Ansprüche, **dadurch gekennzeichnet, dass** das mineralische Element ausgewählt ist aus Alkalimetallen und Erdalkalimetallen und Eisen.

6. Anlage nach Anspruch 5, **dadurch gekennzeichnet, dass** das mineralische Element ausgewählt ist aus der Gruppe, bestehend aus Magnesium, Calcium, Natrium und Kalium.

7. Anlage nach einem der vorhergehenden Ansprüche, **dadurch gekennzeichnet, dass** die Filtervorrichtung (2) ein System durch Umkehrosmose ist.

8. Verfahren zum Mineralisieren eines wässrigen Getränks vom Typ Trinkwasser, umfassend die folgenden Schritte:
- vorheriges Filtern des Getränks; dann
- Mineralisieren des so gefilterten Getränks durch Zirkulieren in einem Behälter (31), der mindestens eine Verbindung (311) enthält, die mindestens ein mineralisches Element in Form eines elektropositiven Metalls oder dessen Salzes umfasst, und
**dadurch gekennzeichnet, dass** die Mineralisierung auf elektrolytischem Weg durchgeführt wird und die folgenden Schritte umfasst:
- Durchführen einer elektrochemischen Zelle, umfassend einen anodischen Reaktor zur Mineralisierung (31), der aus dem Behälter (31) besteht, in dem das gefilterte Getränk zirkuliert wird, wobei der anodische Reaktor (31) die Verbindung (311) als lösliche Anode enthält, die mit dem positiven Pol eines elektrischen Stromgenerators (6) verbunden ist, und einen kathodischen Reaktor (32), der eine Kathode (321) aus rostfreiem Stahl umfasst, die in eine mit Salzen gesättigte Lösung getaucht ist, die ausgelegt ist, um die elektrische Leitfähigkeit im Medium sicherzustellen und gleichzeitig zu vermeiden, dass durch Reduktion erneut Metall auf der Kathode (321) abgelegt wird, wobei die Kathode (321) mit dem negativen Pol des Generators (6) verbunden ist, wobei die anodischen (32) und kathodischen Reaktoren (31) im Inneren der Vorrichtung zum Mineralisieren (3) durch eine Membran (5), die für die metallischen Kationen des mineralischen Elements undurchlässig ist, getrennt sind, dann
- Anlegen einer Potentialdifferenz zwischen der Anode und der Kathode, um an der Anode die Bildung von metallischen Kationen de mineralischen Elements hervorzurufen.

9. Verfahren nach Anspruch 8, **dadurch gekennzeichnet, dass** das Filtern durch Umkehrosmose durchgeführt wird.

## Claims

1. Facility (1) for mineralising an aqueous beverage, including:
- a beverage filtration device (2),
- a device (3) for mineralising the filtered beverage including a tank, in which at least one compound (311) is placed, including at least one mineral element in the form of a metal or a salt thereof, and
- a system (4) for circulation of the beverage in said facility (1) capable of carrying the filtered beverage from said filtration device (2) to said mineralisation device (3),
**characterised in that** the mineralisation device (3) includes:
- an anodic mineralisation reactor (31), which contains:
- a system (310) for introducing the water to be mineralised communicating with said circulation system (4),
- said compound (311) constituting a soluble anode (311) linked to the positive pole of an electric current generator (6) and said mineral element contained in the soluble anode (311) being capable of forming metal cations under the effect of an electric current,
- a system (312) for removing the beverage once mineralised from said anodisation reactor,
- a cathodic reactor (32) including a cathode (321) immersed in a solution saturated with salts capable of ensuring electrical conduction in the medium while avoiding the redeposition by reduction of the metal on said cathode (321), said cathode (321) being linked to the negative pole of said generator (6),
- a membrane (5) impermeable to the metal cations of said mineral element obtained from the soluble anode (311) under the effect of an electric current, said membrane (5) separating said anodic (31) and cathodic (32) reactors inside the mineralisation device (3).

2. Facility according to claim 1, **characterised in that** the compound of the soluble anode (311) is essentially metallic and is constituted by the mineral element in the form of pure metal or alloyed with one or more other chemical element(s).

3. Facility according to claim 1, **characterised in that** the compound of the soluble anode (311) is constituted by a porous material, the pores of which are filled with at least one mineral salt.

4. Facility according to claim 3, **characterised in that** the porous material of said soluble anode (311) is a metal foam.

5. Facility according to any one of the previous claims, **characterised in that** the mineral element is chosen from the alkaline metals and the alkaline earth metals and iron.

6. Facility according to claim 5, **characterised in that** the mineral element is chosen from the group including magnesium, calcium, sodium and potassium.

7. Facility according to any one of the previous claims, **characterised in that** the filtration device (2) is a reverse osmosis system.

8. Method for mineralising an aqueous beverage of the drinking water type, including the following steps:
- preliminary filtration of the beverage; then
- mineralisation of the beverage thus filtered by circulation in a tank (31) containing at least one compound (311) comprising at least one mineral element in the form of an electropositive metal or a salt thereof, and
**characterised in that** the mineralisation is performed electrolytically and comprises the following steps:
- implementation of an electrochemical cell including an anodic mineralisation reactor (31) consisting of the tank (31) in which the filtered beverage is circulated, said anodic reactor (31) containing said compound (311) as a soluble anode linked to the positive pole of an electric current generator (6), and a cathodic reactor (32) including a stainless steel cathode (321) immersed in a solution saturated with salts capable of ensuring the electrical conduction in the medium while avoiding the redeposition by reduction of the metal on said cathode (321), said cathode (321) being linked to the negative pole of said generator (6), said anodic (31) and cathodic (32) reactors being separated inside the mineralisation device (3) by a membrane (5) impermeable to the metal cations of said mineral element, then
- applying a difference in potential between the anode and the cathode, so as to generate, at the anode, the formation of metal cations of said mineral element.

9. Method according to claim 8, **characterised in that** the filtration is performed by reverse osmosis.
